# EUROPÄISCHE PATENTSCHRIFT

(11) **EP 3 601 809 B1**
(45) Veröffentlichungstag und Bekanntmachung des Hinweises auf die Patenterteilung: **12.05.2021**
(21) Anmeldenummer: 18712579.4
(22) Anmeldetag: 20.03.2018
(51) Int. Cl.: F15B 15/22, F16H 63/06, F15B 11/048, F15B 11/12

(54) **AKTUATOR FÜR EIN AUTOMATISIERTES ODER AUTOMATISCHES SCHALTGETRIEBE UND VERFAHREN ZUR STEUERUNG DIESES AKTUATORS**
ACTUATOR FOR AN AUTOMATED OR AUTOMATIC TRANSMISSION, AND METHOD FOR CONTROLLING SAID ACTUATOR
ACTIONNEUR POUR UNE BOÎTE DE VITESSES AUTOMATISÉE OU AUTOMATIQUE ET PROCÉDÉ PERMETTANT DE COMMANDER CET ACTIONNEUR

(30) Priorität: 29.03.2017 DE 102017003017
(43) Veröffentlichungstag der Anmeldung: 05.02.2020
(73) Patentinhaber: WABCO GmbH, 30453 Hannover Niedersachsen (DE)
(72) Erfinder: POUX, Romain, 30163 Hannover (DE); GERLACH, Timo, 30163 Hannover (DE); REIMANN, Dennis, 30657 Hannover (DE)
(74) Vertreter: Copi, Joachim
(86) Internationale Anmeldenummer: PCT/EP2018/056978
(87) Internationale Veröffentlichungsnummer: WO 2018/177802

(56) Entgegenhaltungen:
- EP-A2- 2 657 541
- DE-T5-112014 006 457

## Beschreibung

Die Erfindung betrifft einen Aktuator ein automatisiertes oder automatisches Schaltgetriebe, welcher ein Zylindergehäuse, eine Kolbeneinheit und eine Kolbenstange aufweist, bei dem die Kolbeneinheit mit der Kolbenstange gekoppelt und in dem Zylindergehäuse entlang einer axialen Längsachse beweglich angeordnet ist, bei dem die Kolbeneinheit zwei hinsichtlich ihres Volumens variable Druckräume in dem Zylindergehäuse voneinander trennt, mittels denen die Kolbeneinheit doppelseitig mit Druckluft beaufschlagbar ist, bei dem die beiden Druckräume mit einer Ventileinheit verbunden sind, mittels der die eine Druckbeaufschlagung oder Entlüftung jeder der beiden Druckräume schaltbar ist, und bei dem eine Endanschlagdämpfungseinrichtung zur Dämpfung mindestens eines Endanschlags der Kolbeneinheit in dem Aktuator angeordnet ist. Die Erfindung betrifft außerdem ein Verfahren zur Steuerung eines solchen Aktuators.

Derartige Aktuatoren werden unter anderem als Getriebesteller für automatisierte oder automatische Schaltgetriebe in Antriebssträngen von Kraftfahrzeugen eingesetzt, um Gänge ein- und auszulegen. Eine bekannte Bauweise eines solchen Aktuators ist ein sogenannter Zwei- oder Mehrstellungszylinder. Beide sind als Kolben-ZylinderAnordnungen ausgebildet. Bei einem Zweistellungszylinder weist eine linear verschiebbare Kolbenstange an einem Ende einen doppelseitig wirkenden Kolben beziehungsweise eine aus mehreren Kolbenteilen zusammengesetzte und doppelseitig mit einem Fluid beaufschlagbare Kolbeneinheit auf. Der Kolben wird beispielsweise mit Druckluft beaufschlagt, welche je nach beabsichtigter Bewegungsrichtung in einen von zwei Druckräumen ventilgesteuert einströmt, während der jeweils andere Druckraum entlüftet wird. Die Kolbenstange weist außerhalb des Zweistellungszylinders eine Schnittstelle zur Übertragung einer Stellkraft auf ein Schaltelement oder dergleichen des Getriebes auf. Die Beaufschlagung des Kolbens durch Druckluft über die Druckräume sowie die Entlüftung der Druckräume wird durch eine Ventileinheit gesteuert, wobei in der Regel jedem der Druckräume ein Ventil, beispielsweise jeweils ein Wege-Magnetventil, zugeordnet ist, welches daran angeschlossene Druckleitungen öffnet oder schließt.

Die Stellbeschleunigung und Stellgeschwindigkeit eines derartigen Kolbens ist im Wesentlichen bestimmt durch die Massenströme der Druckluft zur Beaufschlagung auf der einen und zur Entlüftung auf der anderen Seite des Kolbens, wobei die Massenströme von den Querschnittsflächen der betroffenen Leitungen und Öffnungen abhängen. Weitere relevante Parameter, insbesondere für das Ansprechverhalten des Kolbens zur Durchführung der Kolbenbewegung sind ein konstruktiv bedingtes Totvolumen sowie die Masse und die Reibung der bewegten Elemente.

Bei einem derartigen Betrieb fahren der Kolben und die Kolbenstange mit vergleichsweise hoher Geschwindigkeit hin und her. Diese Bewegung wird am Ende des Stellwegs üblicherweise durch einen gehäusefesten Endanschlag für den Kolben und/oder für die Kolbenstange gestoppt. Dieser Endanschlag muss die verbleibende kinetische Energie der bewegten Teile aufnehmen. Die betroffenen Bauteile werden dadurch hoch beansprucht. Durch häufige und heftige mechanische Stöße am Endanschlag kann sich die maximale Gebrauchsdauer von Schaltelementen, wie beispielsweise Schalthebel und Schaltgabeln sowie von Getriebebauteilen, wie beispielsweise Synchronringen und Zahnrädern, verringern. Außerdem können Fehlfunktionen in der elektronischen Getriebesteuerung entstehen. Laute Anschlaggeräusche und Schaltstöße beeinträchtigen zudem den Schaltkomfort eines Getriebes. Gerade bei einem Getriebe scheint es daher einerseits sinnvoll, die Endanschlagsgeschwindigkeit auf ein Minimum zu verringern, um eine sanfte Bewegung, nämlich ein stufenweises und/oder kontinuierliches Herantasten von Kolben beziehungsweise Kolbenstange an den Endanschlag herbeizuführen. Dadurch entsteht jedoch ein Zielkonflikt, da die Aktuatoren hohe Stellgeschwindigkeiten des Kolbens beziehungsweise der Kolbenstange erzeugen sollen, um die Getriebegänge schnellstmöglich einzulegen, um kurze Schaltzeiten zu erreichen und Drehmomentverluste während der Schaltung der Gänge so gering wie möglich zu halten.

Vor dem Hintergrund dieser Problematik sind bereits Vorschläge zur Endanschlagdämpfung beziehungsweise zur Endlagendämpfung eines in einem Zylindergehäuse linear beweglichen, druckmittelgetriebenen Kolbens gemacht geworden. Es ist bereits bekannt, einen Kolbenanschlag nur durch elastische Anschläge zu dämpfen. Dadurch ist jedoch die jeweilige Endlage des Kolbens häufig nicht exakt definiert. Es ist auch bereits vorgeschlagen worden, ein Arbeitsmedium in einem Druckraum zum Dämpfen eines Endanschlags eines Kolbens beziehungsweise einer Kolbenstange zu benutzen.

Aus der DE 195 43 646 A1 ist ein Aktuator einer pneumatischen Schalteinrichtung für ein Schaltgetriebe bekannt. Der Aktuator weist einen Zylinder auf, in welchem ein doppelseitig pneumatisch beaufschlagbarer Kolben mit einer Kolbenstange gleitend angeordnet ist. Die Kolbenstange ist mit einem Schaltmechanismus des Getriebes verbunden. In dem Kolben ist ein längsbeweglicher Schieber angeordnet, der vor Erreichen einer Endlage einen Durchflusskanal in dem Kolben öffnet, sodass ein Druckausgleich in den Druckräumen beiderseits des Kolbens erfolgt, wodurch ein Dämpfungseffekt erreicht wird.

Aus der DE 10 2009 029 038 A1 ist ein Aktuator einer Schalteinrichtung eines Fahrzeuggetriebes bekannt, bei dem eine Kolbeneinheit mit einer Kolbenstange in einem Druckzylinder gleitend angeordnet ist. Der Kolben unterteilt den Druckzylinder in zwei variable Druckräume. Die beiden Druckräume können über eine Druckluftversorgung, je nach Bewegungsrichtung der Kolbeneinheit, abwechselnd mit Druckluft beaufschlagt oder entlüftet werden. Die Kolbeneinheit weist einen ringförmigen äußeren Kolben auf, innerhalb dessen ein innerer Kolben gleitend angeordnet ist, welcher mit der Kolbenstange verbunden ist und relativ zu dem äußeren Kolben einen zusätzlichen Hub ausführen kann, wobei der Hub des inneren Kolbens gegenüber dem äußern Kolben durch Anschlagsscheiben begrenzt ist. Der Hub des äußeren Kolbens ist durch Anschlagsflächen an dem Druckzylinder begrenzt. Zur Dämpfung des Anschlags des äußeren Kolbens an den Anschlagsflächen weist der äußere Kolben Dämpfungsauflagen auf, welche ein Anschlaggeräusch vermindern und den Aufprall dämpfen.

Die DE 10 2014 018 631 A1 zeigt einen Aktuator zur Bewegung eines Schalthebels in einem Getriebe, mit einer pneumatisch bewegbaren Kolbenstange, welcher ein Kolben mit wenigstens einem pneumatisch beaufschlagbaren Druckraum zugeordnet ist. Die Kolbenstange weist eine Endlagendämpfung auf. An einem von dem Kolben abgewandten Ende der Kolbenstange weist die Kolbenstange einen Kopf auf, mit dem sie in einen weiteren Druckraum eintaucht. Bei einer Bewegung des Kolbenkopfs in den Druckraum hinein erhöht sich der Druck in Letzterem, so dass die Bewegung der Kolbenstange gedämpft wird. An den kolbenkopfseitigen Druckraum schließt sich eine Leitung mit einem Magnetventil an. Durch Öffnen oder durch Schließen des Magnetventils ist der Druck in dem kolbenkopfseitigen Druckraum einstellbar. Der Querschnitt der Anschlussleitung beträgt dabei nur einen Bruchteil eines wirksamen Durchmessers des Kolbenstangenkopfes.

Das Dokument DE11 2014 006457 T5 offenbart ein Aktuator mit einem mechanischen Dämpfer und einen fluidischen Dämpfer mit einer Dämpfungsstange am Kolben die in einer Dämpfungsöffnung einsetzbar ist. Wenn, durch die Bewegung des Kolbens, die erste Dämpfungsöffnung durch die erste Dämpfungsstange verschlossen wird, fließt das Fluid aus der Zylinderkammer lediglich durch eine Blende, somit wird die Geschwindigkeit des Kolbens reduziert. Der mechanischen Dämpfer kommt an Ende der Bewegung des Kolbens zum Einsatz.

De Erfindung liegt vor diesem Hintergrund die Aufgabe zugrunde, einen Aktuator für ein automatisierten oder automatisches Schaltgetriebes der eingangs genannte Art, also mit einer Endanschlagdämpfungseinrichtung zur Dämpfung eines Endanschlags einer Kolbeneinheit, hinsichtlich verschleißfreier und geräuschfreier Schaltvorgänge mit kurzen Schaltzeiten weiterzuentwickeln. Insbesondere soll bei einer Betätigung des Aktuators die Kolbenbewegung möglichst ohne Schaltzeitverlust insbesondere in ihrer Endphase verlangsamt werden, und die Kolbeneinheit soll ihre vorgesehene Position beim Erreichen des Endanschlags möglichst genau, idealerweise ohne zurück zu federn, einnehmen können. Eine weitere an die Erfindung gerichtete Aufgabe besteht darin, ein Verfahren zur Steuerung eines solchen Aktuators anzugeben. Insbesondere soll ein solcher Aktuator, der mit einem solchen Verfahren gesteuert werden kann, zur Verwendung in einem automatisierten oder automatischen Fahrzeuggetriebe in einem Antriebsstrang eines Kraftfahrzeugs geeignet sein.

Der Erfindung liegt die Erkenntnis zugrunde, dass es bei einer Endanschlagdämpfungseinrichtung eines gattungsgemäßen Aktuators, bei der ein Kolben bei Erreichen eines Endanschlags rein mechanisch gebremst wird, aufgrund der hohen geforderten Stellgeschwindigkeiten des Kolbens zu einem heftigen Anschlagen kommen kann, wodurch betroffene Komponenten nachteilig mechanisch belastet werden. Bei einem Abbremsen des Kolbens mittels eines elastischen Puffers bei hoher Anschlaggeschwindigkeit kann der Koben zudem in die Gegenrichtung zurückfedern und dann in einer nicht definierten Endlage verbleiben. Andererseits ist eine rein durch Fluide wirksame Abbremsung, bei welcher der Kolben beim Erreichen seiner Endlage idealerweise die Endgeschwindigkeit Null hat, ohne signifikante Verlängerung der Schaltzeit kaum realisierbar. Dies ist besonders dann der Fall, wenn ein Gegendruck, welcher der Kolbenbewegung entgegengerichtet ist, zu stark ansteigt und den Kolben sehr verlangsamt.

Derartige Dämpfungsmaßnahmen können einzeln eingesetzt einen Kolben nicht gleichzeitig so schnell, sanft und zielgenau an einen Endanschlag anlegen, wie es eine zweistufige Dämpfung kann, bei der zielgerichtet eine variable pneumatische Dämpfungsstufe beim Anfahren des Endanschlags mit einer mechanischen Dämpfungsstufe auf dem letzten Stück, insbesondere auf dem letzten Millimeter der Kolbenbewegung, kombiniert wird. Durch eine Kombination von zwei unterschiedlichen Dämpfungsstufen ist hingegen bei einem Kolben eines Aktuators ein erheblicher Vorteil hinsichtlich einer verschleißmindernden Verringerung einer Endanschlaggeschwindigkeit und einer Verringerung eines Endanschlaggeräusches sowie einer Vermeidung von Schaltzeitverlusten durch die Dämpfung erreichbar.

Die Erfindung geht daher aus von einem Aktuator für ein automatisiertes oder automatisches Schaltgetriebe, welcher ein Zylindergehäuse, eine Kolbeneinheit und eine Kolbenstange aufweist, bei dem die Kolbeneinheit mit der Kolbenstange gekoppelt und in dem Zylindergehäuse entlang einer axialen Längsachse beweglich angeordnet ist, bei dem die Kolbeneinheit zwei hinsichtlich ihres Volumens variable Druckräume in dem Zylindergehäuse voneinander trennt, mittels denen die Kolbeneinheit doppelseitig mit Druckluft beaufschlagbar ist, bei dem die beiden Druckräume mit einer Ventileinheit verbunden sind, mittels der die eine Druckbeaufschlagung oder Entlüftung jeder der beiden Druckräume schaltbar ist, und bei dem eine Endanschlagdämpfungseinrichtung zur Dämpfung mindestens eines Endanschlags der Kolbeneinheit in dem Aktuator angeordnet ist.

Zur Lösung der vorrichtungsbezogenen Aufgabe sieht die Erfindung vor, dass die Endanschlagdämpfungseinrichtung zweistufig ausgebildet ist, nämlich mit einer ersten, pneumatisch wirksamen Dämpfungsstufe und mit einer zweiten, mechanisch wirksamen Dämpfungsstufe, dass mittels der pneumatischen Dämpfungsstufe die kinetische Energie der Kolbeneinheit in mindestens einer Bewegungsrichtung derselben koaxial zur Längsachse bei einer Annäherung der Kolbeneinheit an eine an dem Zylindergehäuse ausgebildete Endanschlagfläche mittels eines pneumatischen Dämpfungselements verringerbar ist, dass das pneumatische Dämpfungselement einen hinsichtlich seiner Durchlassfähigkeit für Druckluft veränderbaren Luftaustritt aufweist, welcher durch Schalten der Ventileinheit in eine Entlüftungsstellung mit einem der beiden Druckräume pneumatisch verbindbar ist, wobei die wirksame Querschnittsfläche des Luftaustritts in Abhängigkeit von dem Druck in dem mit diesem verbundenen Druckraum variabel einstellbar ist, und bei dem mittels der mechanischen Dämpfungsstufe eine nach dem Abbremsen durch das pneumatische Dämpfungselement verbleibende kinetischen Energie der Kolbeneinheit bei dessen Erreichen der Endanschlagfläche mittels eines mechanischen Dämpfungselements abbaubar ist.

Eine Kolbeneinheit kann aus einem Kolben oder aus mehreren Kolben bestehen, beispielsweise aus einem Hauptkolben und zwei Hilfskolben, welche Relativbewegungen zueinander ausüben können. Bei einer Kolbenbewegung entlang einer Längsachse kann es sich um eine Bewegung eines einzelnen Kolbens oder um eine gemeinsame Bewegung mehrerer Kolben einer Kolbeneinheit in Richtung beziehungsweise koaxial zu deren Längsachse handeln, beispielsweise um eine gemeinsame Bewegung eines Hauptkolbens und jeweils eines radial auf diesem gelagert angeordneten Hilfskolbens.

Die Erfindung schlägt vor, eine Bewegung einer Kolbeneinheit eines Aktuators hin zu einer axialen Endlage in zwei zeitlich hintereinander wirksamen Dämpfungsstufen abzubremsen. Eine pneumatische Dämpfung soll den Hauptanteil an der Verlangsamung der Kolbenbewegung tragen. Eine anschließende mechanische Dämpfung soll die kinetische Restenergie der Kolbeneinheit aufnehmen. Demnach beinhaltet eine erste Dämpfungsstufe eine variable pneumatische Dämpfung und besteht darin, zunächst einen Gegendruck in dem Druckraum auf der Gegenseite der Kolbenbewegung zu erzeugen. Dies wird dadurch erreicht, dass zunächst nur ein relativ geringer Luftmassenstrom aus dem Druckraum heraus zur Entlüftung zugelassen wird, so dass durch die Verdichtung der Luft bei der Kolbenbewegung in diesen Druckraum hinein ein Druckanstieg in dem Druckraum erzeugt wird. Einerseits ist es wesentlich, einen möglichst hohen Gegendruck zu erreichen, um einen hohen Dämpfungseffekt zu erhalten. Andererseits ist es aber auch notwendig, den Druckraum in einer bestimmten Zeit zu entlüften, um die Endposition der Kolbeneinheit in einer geforderten Zeit zu erreichen und einen vorzeitigen Stillstand oder gar eine Rückbewegung der Kolbeneinheit durch einen zu hohen Gegendruck auszuschließen. Daher wird bei dem Aktuator gemäß der Erfindung der Druckanstieg in dem Druckraum begrenzt durchgeführt, indem eine größere Querschnittsfläche für einen Luftaustritt durch eine Luftaustrittsöffnung erst dann freigegeben wird, wenn der Gegendruck zu groß wird. Die größere Querschnittsfläche des Luftaustritts der Luftaustrittsöffnung ermöglicht dann einen entsprechend höheren Luftmassenstrom zur Entlüftung des betreffenden Druckraums. Die Erhöhung des Luftmassenstroms zur Entlüftung ist allerdings so bemessen, dass die Kolbenbewegung noch ausreichend abgebremst wird, um ein heftiges Anschlagen des Kolbens an das Zylindergehäuse in seiner Endlage zu vermeiden.

Die pneumatische Dämpfung trägt den Hauptanteil an der Verlangsamung der Kolbenbewegung. Daran schließt sich eine mechanische Dämpfungsstufe an. Diese kann beispielsweise aus einfachen Gummipuffern oder dergleichen bestehen, welche durch eine elastische Deformation die Restenergie der Kolbenbewegung absorbieren, ohne die Kolbeneinheit merklich zurück zu federn. Beide Dämpfungsstufen sind einzeln für sich funktionell, die zweistufige Endanschlagdämpfung mit nacheinander arbeitenden pneumatischen und mechanischen Dämpfungsstufen ermöglicht jedoch die angestrebte Verbesserung des Aktuators besonders vorteilhaft.

In einer Computersimulation einer derartigen zweistufigen Endanschlagdämpfungseinrichtung gemäß der Erfindung, in der verschiedene zeit- beziehungsweise stellwegabhängige Gegendruckverläufe einer Kolbenbewegung simuliert worden sind, konnte die Effektivität der Erfindung bereits verifiziert werden. Darin konnte gemäß der Erfindung gezeigt werden, dass durch eine geeignet konfigurierte Kombination einer pneumatischen Dämpfungsstufe mit Gegendruckbegrenzung und einer mechanischen Dämpfungsstufe ein erheblicher Vorteil in Bezug auf eine Endanschlaggeschwindigkeitsverringerung sowie eine Klirrgeräuschverringerung beim Endanschlag eines Kolbens erreichbar ist, ohne durch die Kolbendämpfung signifikante Schaltzeitverluste zu verursachen. Dies ist insbesondere im Vergleich zu bestehenden Aktuatoren am Markt zu sehen, mit Systemen, welche jeweils mit nur einer von den beiden benannten Kolbendämpfungsarten arbeiten und/oder nur eine invariable Dämpfung eines Kolbens oder einer Kolbenstange zur Verfügung stellen.

Durch die Erfindung ist es gelungen, einen Aktuator für ein automatisiertes oder automatisches Schaltgetriebe vorzustellen, der Stoßbelastungen auf Getriebekomponenten eines Schaltgetriebes und auf den Aktuator selbst verringert. Die maximale Gebrauchsdauer insbesondere der Schaltvorrichtung des Getriebes wird somit nicht durch derartige Belastungen begrenzt. Zugleich verringert sich das Geräuschniveau bei Schaltvorgängen, wodurch sich der Betriebskomfort des Getriebes erhöht. Dies kann erreicht werden, ohne dass sich die Schaltzeiten zum Wechseln von Gängen in einem automatisierten oder automatischen Schaltgetriebe merklich vergrößern. Durch die Kolbendämpfung entstehen somit auch keine oder allenfalls marginale zusätzliche Drehmomentverluste aufgrund von Zugkraftunterbrechungen bei den Schaltvorgängen. Die Performance des Antriebstrangs wird somit durch die Dämpfung der Kolbenbewegung nicht oder wenigstens nicht merklich beeinträchtigt.

Gemäß einer bevorzugten Ausführungsform eines gemäß der Erfindung ausgebildeten Aktuators ist vorgesehen, dass die Endanschlagdämpfungseinrichtung für beide Bewegungsrichtungen der Kolbeneinheit koaxial zur Längsachse ausgebildet beziehungsweise wirksam ist, wobei die pneumatische Dämpfungsstufe ein erstes pneumatisches Dämpfungselement für eine erste Bewegungsrichtung koaxial zur Längsachse sowie ein zweites pneumatisches Dämpfungselement für eine zweite Bewegungsrichtung koaxial zur Längsachse aufweist, welche der Ventileinheit zugeordnet sind, und dass die mechanische Dämpfungsstufe ein erstes mechanisches Dämpfungselement zum axialen Anschlagen der Kolbeneinheit an eine erste Endanschlagfläche des Zylindergehäuses sowie ein zweites mechanisches Dämpfungselement zum Anschlagen der Kolbeneinheit an eine gegenüberliegende zweite Endanschlagfläche des Zylindergehäuses aufweist, welche an der Kolbeneinheit angeordnet sind.

Dadurch, dass pneumatische und mechanische Dämpfungselemente für beide Druckräume vorhanden sind, wird eine vorteilhafte zweistufige Dämpfung einer Kolbeneinheit in beiden möglichen linearen Stell- beziehungsweise Schaltrichtungen des Aktuators erreicht.

Gemäß einer weiter auskonstruierten Ausführungsform des Aktuators gemäß der Erfindung kann vorgesehen sein, dass das erste pneumatische Dämpfungselement durch ein erstes 3/2-Wege-Magnetventil der Ventileinheit schaltbar ist, dass das zweite pneumatische Dämpfungselement durch ein zweites 3/2-Wege-Magnetventil der Ventileinheit schaltbar ist, dass die beiden pneumatischen Dämpfungselemente jeweils eine als Federlippe ausgebildete Luftaustrittsklappe aufweisen, welche an einer mit dem ersten Druckraum beziehungsweise mit dem zweiten Druckraum verbindbaren ersten beziehungsweise zweiten Luftaustrittsöffnung eines ersten beziehungsweise zweiten Luftaustritts angeordnet sind. Dabei ist die jeweilige Luftaustrittsklappe an der ersten beziehungsweise zweiten Luftaustrittsöffnung einseitig derart befestigt, dass die jeweilige Luftaustrittsklappe normalerweise mit Federvorspannung an der zugeordneten Luftaustrittsöffnung abdichtend anliegt und bei einer Druckbeaufschlagung der jeweiligen Luftaustrittsklappe aus dem ersten Druckraum beziehungsweise zweiten Druckraum bei Überschreiten eines Druckschwellwerts durch Überwinden der Federvorspannung von der jeweiligen Luftaustrittsöffnung abhebt. Außerdem ist vorgesehen, dass die beiden Luftaustrittsklappen jeweils zusätzlich eine permanent offene Durchgangsöffnung aufweisen, wobei eine wirksame dritte Querschnittsfläche beziehungsweise eine vierte wirksame Querschnittsfläche der ersten Durchgangsöffnung beziehungsweise der zweiten Durchgangsöffnung der Luftaustrittsklappen wesentlich kleiner ist als eine erste wirksame Querschnittsfläche beziehungsweise eine zweite wirksame Querschnittsfläche der durch die erste Luftaustrittsklappe beziehungsweise zweite Luftaustrittsklappe druckabhängig freigebbaren Luftaustrittsöffnung, wobei diese druckabhängig freigebbaren Luftaustrittsöffnungen wiederum wesentlich kleiner sind als eine fünfte wirksame Querschnittsfläche beziehungsweise eine sechste wirksame Querschnittsfläche der Kolbeneinheit.

Durch diese Anordnung ist eine einfache und hinsichtlich des Abströmquerschnitts variable Entlüftungsvorrichtung für die jeweiligen Kolbendruckräume geschaffen. Demnach besitzt jeweils ein 3/2-Wege-Magnetventil der Ventileinheit Anschlüsse für eine Druckluftversorgung, für einen Druckraum und für ein pneumatisches Dämpfungselement mit einer in Schließrichtung federvorgespannten Luftaustrittsklappe. In einer ersten Schaltstellung dieses Magnetventils kann der Druckraum mit Druckluft aus einer Versorgungsleitung beaufschlagt werden. In einer zweiten Schaltstellung kann die Druckluftversorgung gesperrt und zur Entlüftung das pneumatische Dämpfungselement mit dem Druckraum verbunden werden.

Das pneumatische Dämpfungselement besitzt eine permanente Öffnung, über die ein Druckausgleich mit der Atmosphäre geschaffen werden kann. Bewegt sich der Kolben des Aktuators durch Beaufschlagen des gegenüberliegenden Druckraums in den Druckraum hinein, so erhöht sich der Druck in diesem, da die permanente Durchgangsöffnung beziehungsweise Entlüftungsöffnung einen kleineren Wirkungsquerschnitt besitzt als der den wirksamen Druckraum verkleinernde Kolben. Dementsprechend wirkt eine zunächst ansteigende Gegenkraft, welche der Kolbenbewegung entgegengerichtet ist und diese dämpft. Sobald die Druckkraft in dem Druckraum jedoch die Federkraft der Luftaustrittsklappe überwinden kann, öffnet diese eine größere Luftaustrittsöffnung und der Entlüftungsmassenstrom steigt sprunghaft an, so dass die Gegenkraft sinkt und die Bewegung des Kobens weniger gedämpft wird. Sinkt der pneumatische Druck auf die Luftaustrittsklappe unter die Federkraft ab, würde sich die Luftaustrittsklappe wieder schließen. In der Entlüftungsstellung ist also abhängig vom Druck in dem verbundenen Druckraum entweder eine kleine bestimmte Querschnittsfläche oder eine bestimmte große Querschnittsfläche zum Abströmen von Druckluft wirksam. Daraus resultiert eine sich selbst regulierende Dämpfung der Kolbenbewegung. Der Kolben kann zu einem Zeitpunkt, zu dem sich die Luftaustrittsklappe erneut schließen würde, seine vorgesehene Endlage erreicht oder nahezu erreicht haben.

Die Ausführung der Luftaustrittsklappe mit einer einseitig an der Luftaustrittsöffnung befestigten Federlippe ist konstruktiv einfach, kompakt und kostengünstig herstellbar. Der Fachmann kann auch andere Luftaustrittsklappen, welche die beschriebene Funktion erfüllen, finden. Es ist auch eine Luftaustrittsklappe möglich, deren wirksame Querschnittsfläche sich abhängig von dem sie beaufschlagenden Druck in mehr als zwei Stufen oder kontinuierlich verändert.

Gemäß einer weiteren Ausführungsform der Erfindung kann vorgesehen sein, dass die Kolbeneinheit einen mit der Kolbenstange fest verbundenen radial inneren Hauptkolben aufweist, dass der Hauptkolben einen dem ersten Druckraum zugeordneten ersten Hilfskolben und einen dem zweiten Druckraum zugeordneten zweiten Hilfskolben trägt, dass die Hilfskolben radial über dem Hauptkolben und relativ zu diesem sowie koaxial zur Längsachse begrenzt verschiebbar angeordnet sind, dass zum Anschlagen der Kolbeneinheit an der ersten Endanschlagfläche des Zylindergehäuses ein erstes, als Gummipuffer ausgebildetes mechanisches Dämpfungselement stirnseitig der ersten Endanschlagfläche des Zylindergehäuses gegenüberliegend an dem ersten Hilfskolben angeordnet ist, und dass zum Anschlagen der Kolbeneinheit an der zweiten Endanschlagfläche des Zylindergehäuses ein zweites, als Gummipuffer ausgebildetes mechanisches Dämpfungselement stirnseitig der zweiten Endanschlagfläche des Zylindergehäuses gegenüberliegend an dem zweiten Hilfskolben angeordnet ist.

Bei diesem Ausführungsbeispiel eines Aktuators ist demnach ein Hauptkolben vorgesehen, der mit einer Kolbenstange verbunden ist. Eine Verstellung des Kolbens und damit der Kolbenstange erfolgt je Druckraum über einen Hilfskolben, welcher bei Druckbeaufschlagung den Hauptkolben zunächst mitnimmt. Die Bewegung des Hilfskolbens endet an einer Stellwegbegrenzung, welche ein Bestandteils des Aktuatorgehäuses oder ein daran befestigter Anschlagkörper ist. Der ebenfalls druckbeaufschlagte Hauptkolben nimmt von dieser Position aus seinerseits den axial gegenüberliegenden Hilfskolben bis zum Endanschlag mit. Bei dieser Anordnung ist es sinnvoll, die mechanische Dämpfungsstufe gemäß der Erfindung direkt an den Hilfskolben zu befestigen. Dies kann je Hilfskolben jeweils ein einfacher Gummipuffer sein, welcher stirnseitig hervorsteht, so dass zwischen dem Hauptkolben in seiner Endlage und dem umgebenden Zylindergehäuse ein nur geringes Totvolumen verbleibt und der Hauptkolben nicht direkt an einer Gehäusewand anliegt. Dadurch wird das erneute Anschieben des Kolbens aus seiner Endlage in die entgegengesetzte Richtung erleichtert und ein Verschleiß durch direkten flächigen Kontakt zwischen den benachbarten, nicht elastischen Oberflächen vermieden. Bei anders konstruierten Kolben kann durch den Fachmann das mechanische Dämpfungselement und dessen Anordnung einfach an die jeweiligen konstruktiven Gegebenheiten angepasst werden. Für die Erfindung wesentlich ist, dass ein mechanisches Dämpfungselement in der Lage ist, eine kinetische Restenergie des Kolbens, welche bei der pneumatischen Dämpfung übrig bleibt, zu absorbieren.

Weiterhin kann vorgesehen sein, dass das die beiden pneumatischen Dämpfungselemente in einen Ventilblock der Ventileinheit integriert sind. Insbesondere kann der Luftaustritt an einem Ausgang eines Ventilblocks angeordnet sein. Dadurch wird eine besonders kompakte Bauform des Aktuators beziehungsweise einer zugehörigen Ventileinheit erreicht, bei der das jeweilige pneumatische Dämpfungselement nur einen geringen zusätzlichen Bauraum beansprucht. Die beiden pneumatischen Dämpfungselemente können auch direkt in zumindest ein zugeordnetes 3/2-Wege-Magnetventil der Ventileinheit integriert sein. Das Dämpfungselement kann somit konstruktiv einfach an bauliche Vorgaben der Ventileinheit angepasst werden.

Außerdem kann vorgesehen sein, dass ein in einer Endlage der Kolbeneinheit verbleibendes effektives Totvolumen, welches ein im Bereich zwischen der Kolbeneinheit und der ersten beziehungsweise zweiten Endanschlagfläche freibleibendes Volumen in dem jeweiligen Druckraum sowie ein Volumen einer pneumatischen Verbindung zwischen dem jeweiligen Druckraum sowie der zugeordneten Luftaustrittsöffnung des jeweiligen pneumatische Dämpfungselements einschließt, konstruktiv minimiert ausgebildet ist. Ein möglichst geringes Totvolumen ist für eine zweitstufige Endanschlagdämpfungseinrichtung mit pneumatischer und nachfolgend mechanischer Dämpfung vorteilhaft, um den stellwegabhängigen Dämpfungsverlauf für die beiden Dämpfungsstufen genau zu definieren und einstellen zu können.

Wie eingangs geschildert, betrifft die Erfindung auch ein Verfahren zur Steuerung eines Aktuators eines automatisierten oder automatischen Schaltgetriebes, wobei der Aktuator eine Endanschlagdämpfungseinrichtung der zuvor dargestellten Art zur Dämpfung eines Endanschlags einer Kolbeneinheit aufweist.

Zur Lösung der gestellten verfahrensbezogenen Aufgabe sieht die Erfindung vor,
- dass zum Antreiben einer Bewegung der Kolbeneinheit koaxial zu seiner Längsachse einer von zwei Druckräumen, welche durch die Kolbeneinheit in einem Zylindergehäuse voneinander getrennt sind, mit einem Überdruck beaufschlagt und der andere der beiden Druckräume gleichzeitig entlüftet wird,
- dass eine zweistufige Dämpfung zum Dämpfen eines Endanschlags der Kolbeneinheit an einer Endanschlagfläche im Aktuator erfolgt,
   indem zunächst unter Nutzung einer pneumatischen Dämpfungsstufe mittels eines pneumatischen Dämpfungselements bei der Annäherung der Kolbeneinheit an die Endanschlagfläche ein der Kolbenbewegung entgegenwirkender, selbstregulierender Gegendruck in dem zu entlüftenden der beiden Druckräume erzeugt wird,
- wobei eine mit dem Druckraum pneumatisch verbundene wirksame Querschnittsfläche eines Luftaustritts des pneumatischen Dämpfungselements druckabhängig selbständig unterschiedlich groß eingestellt wird,
- und dass anschließend durch Nutzung einer mechanischen Dämpfungsstufe bei Erreichen der Endanschlagfläche die noch verbliebene kinetische Energie der Kolbeneinheit durch elastisches Deformieren eines mechanischen Dämpfungselements abgebaut wird.

Dieses Verfahren erfordert keine gesonderte Ansteuerung der Endanschlagdämpfungseinrichtung. Diese arbeitet vielmehr selbsttätig, indem sich zunächst ein Gegendruck aufbaut, welcher die Kolbenbewegung dämpft. Der Gegendruck wird automatisch begrenzt, indem sich durch den Gegendruck selbst eine größere Luftaustrittsfläche öffnet, wenn dieser eine vorgegebenen Druckgrenzwert übersteigt. Der Kolben wird somit effektiv abgebremst aber gleichzeitig, den Schaltzeitanforderungen genügend, noch schnell genug in seine Endlage geführt, in der er dann schonend durch Deformieren eines elastischen Puffers seine Restenergie abgibt.

Gemäß einer Ausführungsform dieses Verfahrens kann vorgesehen sein, dass ein zeitlicher Verlauf eines Luftmassenstroms einer jeweiligen Entlüftung des jeweiligen Druckraums sowie eines davon abhängigen zeitlichen Verlaufs eines Stellwegs der Kolbeneinheit über eine mit Hilfe eines Simulationsalgorithmus vorab rechnerisch bestimmte Dimensionierung des ersten Luftaustritts beziehungsweise zweiten Luftaustritts zumindest annähernd festgelegt wird, wobei die wirksamen Querschnittsflächen der permanent offenen ersten beziehungsweise zweiten Durchgangsöffnung und der druckabhängig offenen ersten beziehungsweise zweiten Luftaustrittsöffnung sowie die in Schließrichtung wirksame Federvorspannung der ersten beziehungsweise zweiten Luftaustrittsklappe unter Berücksichtigung eines vorgegebenen Druckniveaus einer Druckluftversorgung aufeinander abgestimmt werden.

Die konstruktive Auslegung der Querschnittsflächen der Durchgangsöffnung und der Luftaustrittöffnung sowie die Federvorspannung, mit der die Luftaustrittklappe an der Luftaustrittsöffnung anliegt, können so aufeinander und mit einem vorgegebenen Druckniveau der Druckluftversorgung abgestimmt werden, dass sich ein gewünschter Druckverlauf für die Entlüftung und damit Dämpfung der Kolbenbewegung ergibt. Dadurch kann der Bewegungsablauf des Kolbens mit einfachen Mitteln zeitlich optimiert und gleichzeitig eine Kraft, mit der der Koben auf eine Endanschlagsfläche auftritt, begrenzt werden.

Schließlich betrifft die Erfindung auch ein automatisiertes oder automatisches Schaltgetriebe eines Antriebsstrangs eines Kraftfahrzeugs, mit mindestens einem Aktuator, welcher gemäß wenigstens einem der Vorrichtungsansprüche ausgebildet und gemäß wenigstens einem der Verfahrensansprüche steuerbar ist.

Die Erfindung wird nachstehend anhand von einem in der beigefügten Zeichnung dargestellten Ausführungsbeispiel näher erläutert. In der Zeichnung zeigt
Fig. 1 einen schematischen Längsschnitt durch eine Kolbeneinheit in einer Teildarstellung eines gemäß der Erfindung ausgebildeten Aktuators in einer Neutralstellung,
Fig. 2 die Kolbeneinheit gemäß Fig. 1 in einer Endlagenstellung,
Fig. 3 ein Schaltschema einer Ventileinheit zur Steuerung und Endlagendämpfung der Kolbeneinheit gemäß Fig. 1 und Fig. 2,
Fig. 4 ein vergrößertes Detail eines pneumatischen Dämpfungselements einer Ventileinheit gemäß Fig. 3 mit einer Luftaustrittsklappe in einer ersten Betriebsstellung,
Fig. 5 das Detail gemäß Fig. 4 mit der Luftaustrittsklappe in einer zweiten Betriebsstellung,
Fig. 6 ein kombiniertes Weg-Zeit-Diagramm und Geschwindigkeits-Zeit-Diagramm einer durch eine Kolbeneinheit betätigten Schaltmuffe eines automatisierten Schaltgetriebes bei einer zweistufigen Endlagendämpfung der Kolbeneinheit gemäß der Erfindung,
Fig. 7a ein Druck-Zeit-Diagramm der Drücke in zwei Druckräumen der Kolbeneinheit bei der Betätigung der Schaltmuffe gemäß Fig. 6,
Fig. 7b das Diagramm gemäß Fig. 6 zum Vergleich, und
Fig. 7c ein Luftmassenstrom-Zeit-Diagramm einer Druckraumentlüftung über die Ventileinheit gemäß Fig. 3 sowie gemäß den Figuren 4 und 5.

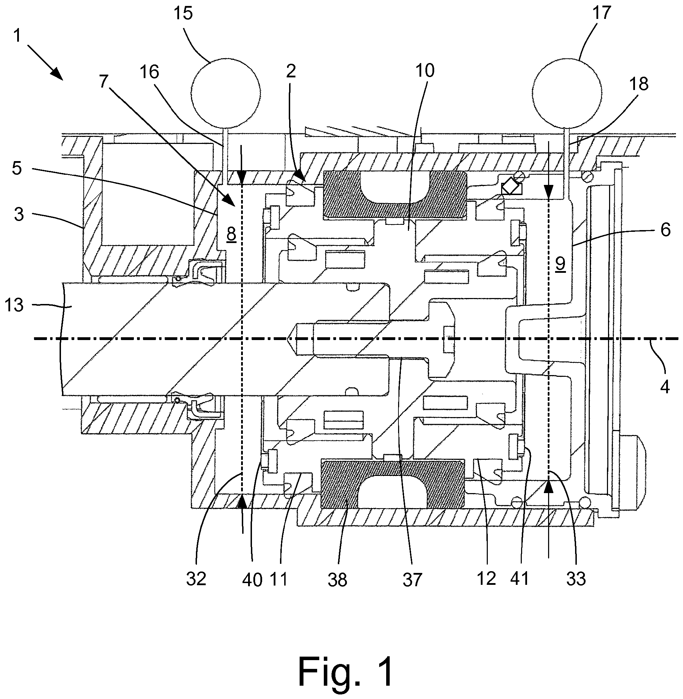

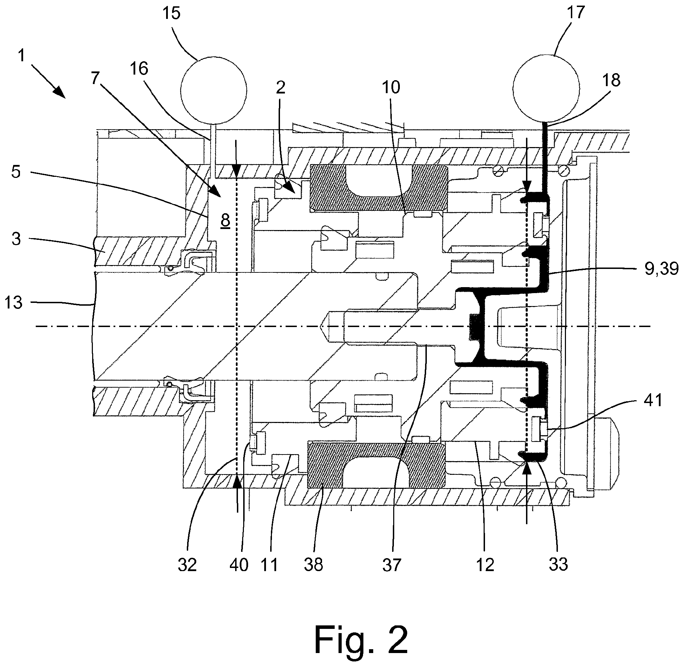

Demnach weist ein in Fig. 1 und Fig. 2 dargestellter Aktuator 1 eines automatisierten Schaltgetriebes eine als Schaltkolben ausgebildete Kolbeneinheit 2 auf, die in einem als Schaltzylinder ausgebildeten Zylindergehäuse 3 koaxial zu einer Längsachse 4 gleitend beweglich angeordnet ist. Die Kolbeneinheit 2 bewegt sich in einer Kolbenkammer 7 des Zylindergehäuse 3 zwischen einer ersten Endanschlagfläche 5 und einer zweiten Endanschlagfläche 6, wobei die Kolbeneinheit 2 die Kolbenkammer 7 in zwei mit Druckluft beaufschlagbare Druckräume 8, 9 unterteilt, welche gegeneinander abgedichtet sind. Die Kolbeneinheit 2 besteht aus einem Hauptkolben 10 und aus zwei Hilfskolben 11, 12. An dem Hauptkolben 10 ist eine Kolbenstange 13 befestigt, welche in dem Zylindergehäuse 3 gleitend gelagert und längs der Längsachse 4 geführt ist. Die Verbindung zwischen dem Hauptkolben 10 und der Kolbenstange 13 ist beispielsweise als eine zweite Schraubverbindung 37 ausgeführt.

Die Kolbenstange 13 ist in bekannter Weise mit einem Schaltelement einer Schaltkupplung, beispielsweise einer Schiebemuffe, im Eingriff oder wirkverbunden (nicht dargestellt). Die beiden Hilfskolben 11, 12 sind radial außen und koaxial auf dem Hauptkolben 10 gleitend sowie jeweils relativ zu diesem axial verschiebbar gelagert, wobei der erste Hilfskolben 11 im ersten Druckraum 8 und der zweite Hilfskolben 12 im zweiten Druckraum 9 angeordnet ist. Die maximalen Stellwege der beiden Hilfskolben 11, 12 sind etwa gleich groß und durch ein etwa mittig in der Kolbenkammer 7 angeordnetes, ringförmiges Stellwegbegrenzungsbauteil 38 begrenzt. Der erste Hilfskolben 11 kann sich somit zwischen der ersten Endanschlagfläche 5 und einer der Stirnseiten des Stellwegbegrenzungsbauteils 38 bewegen, und der zweite Hilfskolben 12 kann sich zwischen der zweiten Endanschlagfläche 6 und der anderen Stirnseite des Stellwegbegrenzungsbauteils 38 bewegen.

Zur Dämpfung des Endanschlags der Kolbeneinheit 2 an der ersten Endanschlagfläche 5 des Zylindergehäuses 3 ist an dem ersten Hilfskolben 11, an seiner der ersten Endanschlagfläche 5 zugewandten Stirnseite, ein als Gummipuffer ausgebildetes erstes mechanisches Dämpfungselement 40 befestigt. Zur Dämpfung des Endanschlags der Kolbeneinheit 2 an der zweiten Endanschlagfläche 6 des Zylindergehäuses 3 ist an dem zweiten Hilfskolben 12, an seiner der zweiten Endanschlagfläche 6 zugewandten Stirnseite, ein als Gummipuffer ausgebildetes zweites mechanisches Dämpfungselement 41 befestigt. Die beiden mechanischen Dämpfungselemente 40, 41 überragen dabei axial die Stirnfläche des jeweiligen Hilfskolbens 11, 12. Jeweils eines der beiden mechanischen Dämpfungselemente 40, 41 ist daher in einer Stellrichtung der Kolbeneinheit 2 als eine mechanische Dämpfungsstufe einer zweistufig arbeitenden Endanschlagdämpfungseinrichtung der Kolbeneinheit 2 wirksam.

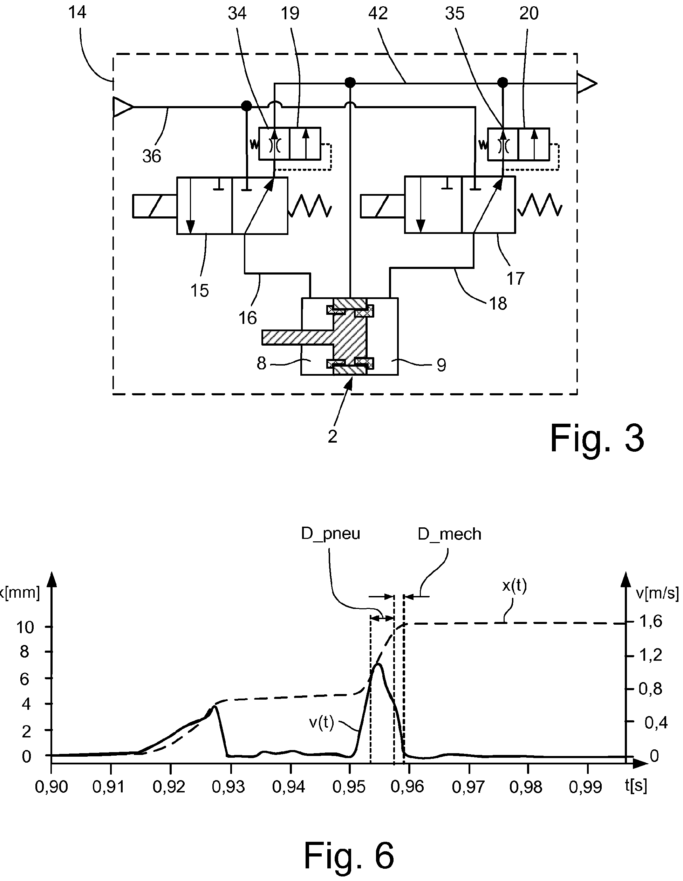

Die beiden Druckräume 8, 9 der Kolbenkammer 7 sind an eine Ventileinheit 14 (Fig. 3) angeschlossen. Die Ventileinheit 14 weist ein erstes 3/2-Wege-Magnetventil 15 auf, welches über eine erste pneumatische Verbindungsleitung 16 mit dem ersten Druckraum 8 verbunden ist, sowie ein zweites 3/2-Wege-Magnetventil 17, welches über zweite pneumatische Verbindungsleitung 18 mit dem zweiten Druckraum 9 verbunden ist. Die beiden Druckräume 8, 9 sind über die beiden Magnetventile 15, 17 mit einer Druckluftversorgung 36 verbindbar, die in Fig. 3 lediglich durch eine pneumatische Verbindungsleitung angedeutet ist. Zur Entlüftung an die Umgebung sind die beiden Druckräume 8, 9 über die beiden Magnetventile 15, 17 mit einer Entlüftungsleitung 42 verbindbar.

Wie Fig. 3 weiterhin zeigt, weist die Ventileinheit 14 ein erstes pneumatisches Dämpfungselement 19 auf, welches mit dem ersten 3/2-Wege-Magnetventil 15 pneumatisch verbunden ist. Zudem ist ein zweites pneumatisches Dämpfungselement 20 vorhanden, welches mit dem zweiten 3/2-Wege-Magnetventil 17 pneumatisch verbunden ist. Jeweils eines der beiden pneumatischen Dämpfungselemente 19, 20 ist in einer Stellrichtung der Kolbeneinheit 2 als eine pneumatische Dämpfungsstufe der zweistufig arbeitenden Endanschlagdämpfungseinrichtung der Kolbeneinheit 2 wirksam.

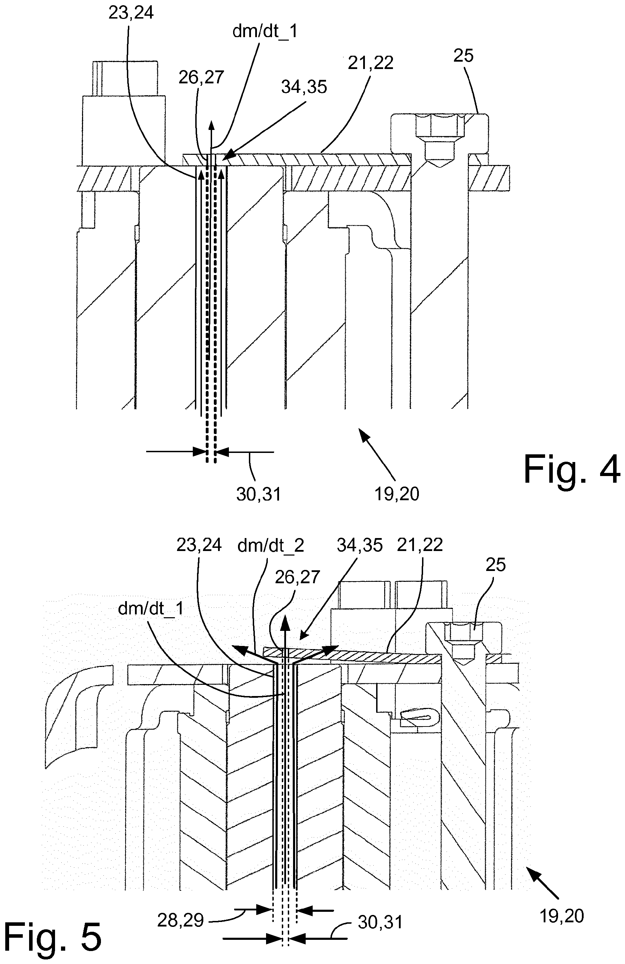

Die beiden pneumatischen Dämpfungselemente 19, 20 können in einen nicht weiter dargestellten Ventilblock, welcher auch die beiden 3/2-Wege-Magnetventil 15, 16 in sich aufnimmt, integriert sein. Da sie baugleich ausgebildet sind genügt es, eines der beiden pneumatischen Dämpfungselemente 19, 20 näher zu beschreiben. Fig. 4 und Fig. 5 zeigen jeweils einen Detailausschnitt eines der beiden pneumatischen Dämpfungselemente 19, 20. Die doppelten Bezugszeichen gelten entsprechend für das erste pneumatische Dämpfungselement 19 oder für das zweite pneumatische Dämpfungselement 20. Demnach weist das erste/zweite pneumatische Dämpfungselement 19, 20 eine als Federlippe ausgebildete erste/zweite Luftaustrittsklappe 21, 22 auf, die in Schließrichtung vorgespannt an einer ersten/zweiten Luftaustrittsöffnung 23, 24 eines ersten/zweiten Luftaustritts 34, 35 anliegt. Die Luftaustrittsklappe 21, 22 ist dazu an einem Ende zwischen einer ersten Schraubverbindung 25 und dem Körper des pneumatische Dämpfungselements 19, 20 eingeklemmt. Die erste/zweite Luftaustrittsklappe 21, 22 weist eine als Bohrung ausgebildete erste/zweite Durchgangsöffnung 26, 27 auf, welche im Gegensatz zu der ersten/zweiten Luftaustrittsöffnung 23, 24 nicht verschließbar sondern permanent offen ist. Die Größenverhältnisse von Kolbeneinheit 2, Luftaustrittsklappe 21, 22 und Durchgangsöffnung 26, 27 sind so konzipiert, dass eine erste/zweite wirksame Querschnittsfläche 28, 29 der ersten/zweiten Luftaustrittsöffnung 23, 24 wesentlich größer ist als eine dritte/vierte wirksame Querschnittsfläche 30, 31 der ersten/zweiten Durchgangsöffnung 26, 27, jedoch wesentlich kleiner als eine fünfte/sechste wirksame Querschnittsfläche 32, 33 der Kolbeneinheit 2 (Fig. 1 und Fig. 2). Die beiden letztgenannten Querschnittsfläche 32, 33 sind durch die jeweils druckraumseitigen, pneumatisch wirksamen Stirnflächen der Kolbeneinheit 2 definiert.

Die Funktionsweise der Kolbeneinheit 2 mit der beschriebenen Endanschlagdämpfungseinrichtung ist wie folgt:
In der in Fig. 1 dargestellten Betriebssituation befindet sich die Kolbeneinheit 2 in einer Neutralstellung und ist dazu mittig in der Kolbenkammer 7 positioniert. Die beiden Hilfskolben 11, 12 befinden sich jeweils an der zugeordneten Stirnseite des Stellwegbegrenzungsbauteils 38. Der Hauptkolben 10 liegt zwischen den beiden Hilfskolben 11, 12 an diesen an. Die beiden 3/2-Wege-Magnetventile 15, 17 der Ventileinheit 14 (Fig. 3) sind in die gleiche von zwei möglichen Schaltstellungen geschaltet, hier in eine Entlüftungsstellung. Die Entlüftung der beiden Druckräume 8, 9 erfolgt über die zugehörigen pneumatischen Dämpfungselemente 19, 20, genauer gesagt über die Durchgangsöffnungen 26, 27 der Luftaustrittsklappen 21, 22 an den Luftaustritten 34, 35 der pneumatischen Dämpfungselemente 19, 20 (Fig. 4). Es findet in dieser Betriebssituation ein Druckausgleich der Druckräume 8, 9 mit der Umgebungsatmosphäre statt.

Um die Kolbenstange 13 beispielsweise aus der in Fig. 1 gezeigten Stellung nach rechts zu verschieben, muss der erste Druckraum 8 mit Druckluft beaufschlagt werden. Dazu wird das erste 3/2-Wege-Magnetventil 15 in seine andere Schaltstellung, hier in eine Druckstellung geschaltet. In dieser Druckstellung des ersten 3/2-Wege-Magnetventils 15 ist der erste Druckraum 8 mit einer Druckluftversorgung 36 pneumatisch verbunden. Der Hauptkolben 10 beginnt sich zu bewegen und nimmt die an ihm befestigte Kolbenstange in die gleiche Bewegungsrichtung koaxial zur Längsachse 4 mit (in Blickrichtung nach rechts). Dabei schiebt der Hauptkolben 10 den zweiten Hilfskolben 12, also den Hilfskolben im gegenüberliegenden zweiten Druckraum 9, vor sich her in Richtung zur zweiten Endanschlagfläche 6. Der erste Hilfskolben 11 bleibt an dem Stellwegbegrenzungsbauteil 38 stehen.

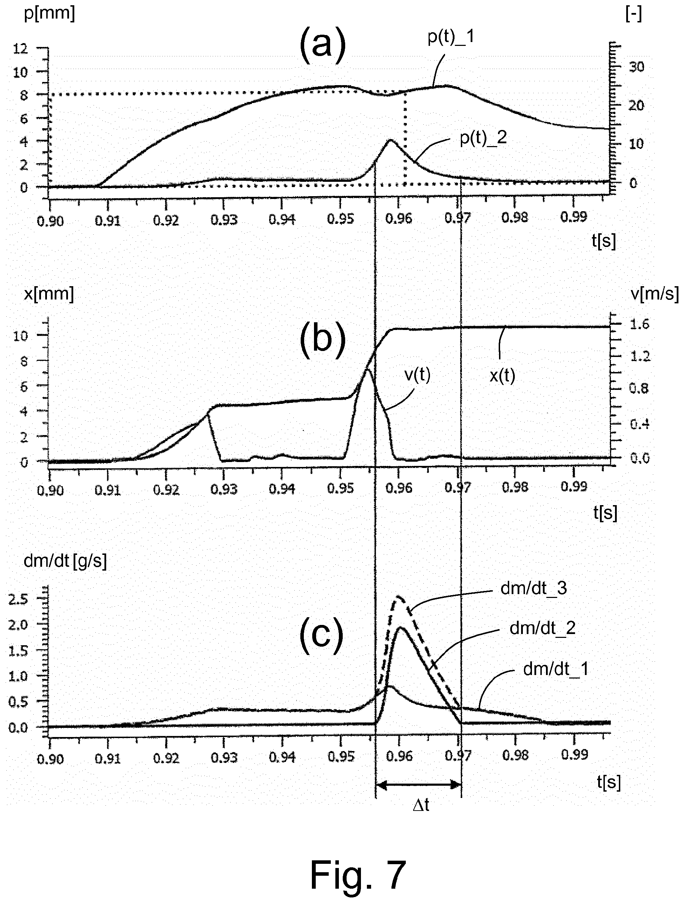

Das zweite 3/2-Wege-Magnetventil 17 befindet sich weiterhin in der Entlüftungsstellung, so dass der zweite Druckraum 9 entlüftet wird. Bei der Entlüftung des zweiten Druckraumes 9 wird die pneumatische Dämpfungsstufe der zweistufig arbeitenden Endanschlagdämpfungseinrichtung der Kolbeneinheit 2 wirksam. Dies wird an den Simulationsdiagrammen gemäß Fig. 6 und Fig. 7a-c verdeutlicht. In den Diagrammen wird die Verstellung der Kolbeneinheit 2 durch den Stellweg einer Schiebemuffe repräsentiert. Dies ist gleichbedeutend mit einer Verstellung der Kolbeneinheit 2, so dass zur Vereinfachung im Folgenden von einer Kolbenbewegung gesprochen werden kann.

In Fig. 6 und Fig. 7b ist der zeitliche Stellwegverlauf x(t) einer Kolbenbewegung sowie ein zugehöriger Geschwindigkeitsverlauf v(t) dieser Kolbenbewegung dargestellt. In Fig. 7a ist ein zugehöriger zeitlicher Druckverlauf p_1(t) der Druckbeaufschlagung des ersten Druckraumes 8 sowie ein Gegendruckverlauf p_2(t) der Entlüftung des zweiten Druckraumes 9 dargestellt. Außerdem sind die zugehörigen jeweiligen Schaltstellungen des ersten 3/2-Wege-Magnetventils 15 (Druckbeaufschlagung von Druckraum 8) und des zweiten 3/2-Wege-Magnetventil 17 (Entlüftung von Druckraum 9 dargestellt). In Fig. 7c ist für die Entlüftung des zweiten Druckraumes 9 ein zugehöriger zeitlicher Verlauf dm/dt_1 eines ersten Luftmassenstroms durch die Durchgangsöffnung 27 in der Luftaustrittsklappe 21, 22, ein zeitlicher Verlauf dm/dt_2 eines zweiten Luftmassenstroms durch die Luftaustrittsöffnung 24 sowie ein daraus resultierender zeitlicher Verlauf eines Gesamtluftmassenstroms dm/dt_3 = dm/dt_1 + dm/dt_2 der Entlüftung dargestellt.

Demnach steigt der Druck p(t)_1 im ersten Druckraum 8 durch die Druckbeaufschlagung mittels der Druckluftversorgung 36 an (Fig. 7a). Im zu entlüftenden zweiten Druckraum 9 ist zunächst nur die kleine Querschnittsfläche 30 der Durchgangsöffnung 26 des Luftaustritts 34 wirksam. Die Luftaustrittsklappe 21 liegt in Schließrichtung vorgespannt an der der Luftaustrittsöffnung 23 an und verschließt diese. Da sich die Kolbeneinheit 2 in den zweiten Druckraum 9 hinein bewegt, wird die Luft in diesem verdichtet und der Druck p(t)_2 steigt an, da der Luftmassenstrom dm/dt_1 zur Entlüftung durch die, im Vergleich zur Querschnittsfläche 32 der Kolbeneinheit 2 kleine Querschnittsfläche 30 der Durchgangsöffnung 26 in der Luftaustrittsklappe 21 begrenzt ist (Fig. 7c).

Der Druck p(t)_2 im zweiten Druckraum 9 wirkt als ein Gegendruck, welcher die Kolbengeschwindigkeit v(t) verringert und dadurch die Kolbenbewegung dämpft (Fig. 7b). Der Gegendruck übersteigt dann die Federvorspannung der Luftaustrittsklappe 21 und öffnet diese, so dass die größere Querschnittsfläche 29 der Luftaustrittsöffnung 24 aktiviert und in einem Zeitfenster Δt wirksam ist. Entsprechend wird Entlüftung durch den größeren Luftmassenstrom dm/dt_2 intensiviert. Als Folge beschleunigt die Kolbeneinheit 2 und erreicht schnell die zweite Endanschlagfläche 6 (Fig. 2). Hier wird durch Anschlagen des zweiten Hilfskolbens 12 an die erste Endanschlagfläche 5 die mechanische Dämpfungsstufe aktiv. Das als Gummipuffer ausgebildete mechanische Dämpfungselement 41 wird elastisch deformiert und wandelt dadurch die verbleibende kinetische Energie der Kolbeneinheit 2 in Wärme um, so dass diese in ihrer Endlage stehen bleibt. In dieser Endlage der Kolbeneinheit 2 ist der zweite Druckraum 9 nahezu vollständig entlüftet. Es verbleibt im zweiten Druckraum 9 lediglich ein in Fig. 2 schwarz ausgefüllt dargestelltes geringes Totvolumen 39.

### Bezugszeichenliste (Bestandteil der Beschreibung)

- 1: Aktuator
- 2: Kolbeneinheit
- 3: Zylindergehäuse
- 4: Längsachse
- 5: Erste Endanschlagfläche am Zylindergehäuse
- 6: Zweite Endanschlagfläche am Zylindergehäuse
- 7: Kolbenkammer
- 8: Erster Druckraum der Kolbenkammer
- 9: Zweiter Druckraum der Kolbenkammer
- 10: Hauptkolben
- 11: Erster Hilfskolben
- 12: Zweiter Hilfskolben
- 13: Kolbenstange
- 14: Ventileinheit
- 15: Erstes 3/2-Wege-Magnetventil
- 16: Erste Verbindungsleitung
- 17: Zweites 3/2-Wege-Magnetventil
- 18: Zweite Verbindungsleitung
- 19: Erstes pneumatisches Dämpfungselement
- 20: Zweites pneumatisches Dämpfungselement
- 21: Erste Luftaustrittsklappe
- 22: Zweite Luftaustrittsklappe
- 23: Erste Luftaustrittsöffnung
- 24: Zweite Luftaustrittsöffnung
- 25: Erste Schraubverbindung
- 26: Erste Durchgangsöffnung
- 27: Zweite Durchgangsöffnung
- 28: Erste Querschnittsfläche
- 29: Zweite Querschnittsfläche
- 30: Dritte Querschnittsfläche
- 31: Vierte Querschnittsfläche
- 32: Fünfte Querschnittsfläche
- 33: Sechste Querschnittsfläche
- 34: Erster Luftaustritt
- 35: Zweiter Luftaustritt
- 36: Druckluftversorgung
- 37: Zweite Schraubverbindung
- 38: Stellwegbegrenzung
- 39: Totvolumen
- 40: Erstes mechanisches Dämpfungselement
- 41: Zweites mechanisches Dämpfungselement
- 42: Entlüftungsleitung
- dm/dt_1: Erster Luftmassenstrom
- dm/dt_2: Zweiter Luftmassenstrom
- dm/dt_3: Gesamtluftmassenstrom
- p(t)_1: Druckverlauf
- p(t)_2: Gegendruckverlauf
- t: Zeit
- Δt: Zeitraum
- v(t): Geschwindigkeitsverlauf
- x(t): Stellwegverlauf

## Patentansprüche

1. Aktuator (1) für ein automatisiertes oder automatisches Schaltgetriebe, welcher ein Zylindergehäuse (3), eine Kolbeneinheit (2) und eine Kolbenstange (13) aufweist, bei dem die Kolbeneinheit (2) mit der Kolbenstange (13) gekoppelt und in dem Zylindergehäuse (3) entlang einer axialen Längsachse (4) beweglich angeordnet ist, bei dem die Kolbeneinheit (2) zwei hinsichtlich ihres Volumens variable Druckräume (8, 9) in dem Zylindergehäuse (3) voneinander trennt, mittels denen die Kolbeneinheit (2) doppelseitig mit Druckluft beaufschlagbar ist, bei dem die beiden Druckräume (8, 9) mit einer Ventileinheit (14) verbunden sind, mittels der die eine Druckbeaufschlagung oder Entlüftung jeder der beiden Druckräume (8, 9) schaltbar ist, und bei dem eine Endanschlagdämpfungseinrichtung zur Dämpfung mindestens eines Endanschlags der Kolbeneinheit (2) in dem Aktuator (1) angeordnet ist, wobei die Endanschlagdämpfungseinrichtung zweistufig ausgebildet ist, nämlich mit einer ersten, pneumatisch wirksamen Dämpfungsstufe und mit einer zweiten, mechanisch wirksamen Dämpfungsstufe, wobei mittels der pneumatischen Dämpfungsstufe die kinetische Energie der Kolbeneinheit (2) in mindestens einer Bewegungsrichtung derselben koaxial zur Längsachse (4) bei einer Annäherung der Kolbeneinheit (2) an eine an dem Zylindergehäuse (3) ausgebildete Endanschlagfläche (5, 6) mittels eines pneumatischen Dämpfungselements (19, 20) verringerbar ist, wobei das pneumatische Dämpfungselement (19, 20) einen hinsichtlich seiner Durchlassfähigkeit für Druckluft veränderbaren Luftaustritt (34, 35) aufweist, welcher durch Schalten der Ventileinheit (14) in eine Entlüftungsstellung mit einem der beiden Druckräume (8, 9) pneumatisch verbindbar ist, wobei die wirksame Querschnittsfläche (28, 29) des Luftaustritts (34, 35) in Abhängigkeit von dem Druck in dem mit diesem verbundenen Druckraum (8, 9) variabel einstellbar ist, und bei dem mittels der mechanischen Dämpfungsstufe eine nach dem Abbremsen durch das pneumatische Dämpfungselement (19, 20) verbleibende kinetischen Energie der Kolbeneinheit (2) bei dessen Erreichen der Endanschlagfläche (5, 6) mittels eines mechanischen Dämpfungselements (40, 41) abbaubar ist.

2. Aktuator nach Anspruch 1, **dadurch gekennzeichnet, dass** die Endanschlagdämpfungseinrichtung für beide Bewegungsrichtungen der Kolbeneinheit (2) koaxial zur Längsachse (4) ausgebildet beziehungsweise wirksam ist, wobei die pneumatische Dämpfungsstufe ein erstes pneumatisches Dämpfungselement (19) für eine erste Bewegungsrichtung koaxial zur Längsachse (4) sowie ein zweites pneumatisches Dämpfungselement (20) für eine zweite Bewegungsrichtung koaxial zur Längsachse (4) aufweist, welche der Ventileinheit (14) zugeordnet sind, und dass die mechanische Dämpfungsstufe ein erstes mechanisches Dämpfungselement (40) zum axialen Anschlagen der Kolbeneinheit (2) an eine erste Endanschlagfläche (5) des Zylindergehäuses (3) sowie ein zweites mechanisches Dämpfungselement (41) zum Anschlagen der Kolbeneinheit (2) an eine gegenüberliegende zweite Endanschlagfläche (6) des Zylindergehäuses (3) aufweist, welche an der Kolbeneinheit (2) angeordnet sind.

3. Aktuator nach Anspruch 2, **dadurch gekennzeichnet, dass** das erste pneumatische Dämpfungselement (19) durch ein erstes 3/2-Wege-Magnetventil (5, 17) der Ventileinheit (14) schaltbar ist, dass das zweite pneumatische Dämpfungselement (20) durch ein zweites 3/2-Wege-Magnetventil (15, 17) der Ventileinheit (14) schaltbar ist, dass die beiden pneumatischen Dämpfungselemente (19, 20) jeweils eine als Federlippe ausgebildete Luftaustrittsklappe (21, 22) aufweisen, welche an einer mit dem ersten Druckraum (8) beziehungsweise mit dem zweiten Druckraum (9) verbindbaren ersten beziehungsweise zweiten Luftaustrittsöffnung (23, 24) eines ersten beziehungsweise zweiten Luftaustritts (34, 35) angeordnet sind, wobei die jeweilige Luftaustrittsklappe (21) an der ersten oder zweiten Luftaustrittsöffnung (23, 24) einseitig derart befestigt ist, dass die jeweilige Luftaustrittsklappe (21, 22) normalerweise mit Federvorspannung an der zugeordneten Luftaustrittsöffnung (23, 24) abdichtend anliegt und bei einer Druckbeaufschlagung der jeweiligen Luftaustrittsklappe (21, 22) aus dem ersten beziehungsweise zweiten Druckraum (8, 9) bei Überschreiten eines Druckschwellwerts durch Überwinden der Federvorspannung von der jeweiligen Luftaustrittsöffnung (23, 24) abhebt, und dass die beiden Luftaustrittsklappen (21, 22) jeweils zusätzlich eine permanent offene Durchgangsöffnung (26, 27) aufweisen, wobei eine wirksame dritte Querschnittsfläche (30) beziehungsweise eine vierte wirksame Querschnittsfläche (31) der ersten Durchgangsöffnung (26) beziehungsweise der zweiten Durchgangsöffnung (27) wesentlich kleiner ist als eine erste Querschnittsfläche (28) beziehungsweise eine zweite wirksame Querschnittsfläche (28, 29) der durch die jeweilige Luftaustrittsklappe (21, 22) druckabhängig freigebbaren Luftaustrittsöffnung (23, 24, wobei diese druckabhängig freigebbaren Luftaustrittsöffnungen (23, 24) wesentlich kleiner sind als eine fünfte wirksame Querschnittsfläche (32) beziehungsweise eine sechste wirksame Querschnittsfläche (33) der Kolbeneinheit (2).

4. Aktuator nach einem der Ansprüche 1 bis 3, **dadurch gekennzeichnet, dass** die Kolbeneinheit (2) einen mit der Kolbenstange (13) fest verbundenen radial inneren Hauptkolben (10) aufweist, dass der Hauptkolben (10) einen dem ersten Druckraum (8) zugeordneten ersten Hilfskolben (11) und einen dem zweiten Druckraum (9) zugeordneten zweiten Hilfskolben (12) trägt, dass die Hilfskolben (11, 12) radial über dem Hauptkolben (2) und relativ zu diesem sowie koaxial zur Längsachse (4) begrenzt verschiebbar angeordnet sind, dass zum Anschlagen der Kolbeneinheit (2) an der ersten Endanschlagfläche (5) des Zylindergehäuses (3) ein erstes, als Gummipuffer ausgebildetes mechanisches Dämpfungselement (40) stirnseitig der ersten Endanschlagfläche (5) des Zylindergehäuses (3) gegenüberliegend an dem ersten Hilfskolben (11) angeordnet ist, und dass zum Anschlagen der Kolbeneinheit (2) an der zweiten Endanschlagfläche (6) des Zylindergehäuses (3) ein zweites, als Gummipuffer ausgebildetes mechanisches Dämpfungselement (41) stirnseitig der zweiten Endanschlagfläche (6) des Zylindergehäuses (3) gegenüberliegend an dem zweiten Hilfskolben (12) angeordnet ist.

5. Aktuator nach einem der Ansprüche 2 bis 4 wenn Anspruch 4 von den Ansprüchen 2 oder 3 abhängig ist, **dadurch gekennzeichnet, dass** die beiden pneumatischen Dämpfungselemente (19, 20) in einen Ventilblock der Ventileinheit (14) integriert sind.

6. Aktuator nach einem der Ansprüche 2, 3, 5 oder 4 wenn Anspruch 4 von den Ansprüchen 2 oder 3 abhängig ist, **dadurch gekennzeichnet, dass** die beiden pneumatischen Dämpfungselemente (19, 20) direkt in jeweils ein zugeordnetes 3/2-Wege-Magnetventil (15, 17) der Ventileinheit (14) integriert sind.

7. Aktuator nach einem der Ansprüche 2, 3, 5, 6 oder 4 wenn Anspruch 4 von den Ansprüchen 2 oder 3 abhängig ist, **dadurch gekennzeichnet, dass** ein in einer Endlage der Kolbeneinheit (2) verbleibendes effektives Totvolumen (39), welches ein im Bereich zwischen der Kolbeneinheit (2) und der ersten beziehungsweise zweiten Endanschlagfläche (5, 6) freibleibendes Volumen in dem jeweiligen Druckraum (8, 9) sowie ein Volumen einer pneumatischen Verbindung zwischen dem jeweiligen Druckraum (8, 9) sowie der zugeordneten Luftaustrittsöffnung (23, 24) des jeweiligen pneumatische Dämpfungselements (19, 20) einschließt, konstruktiv minimiert ausgebildet ist.

8. Verfahren zur Steuerung eines Aktuators (1) eines automatisierten oder automatischen Schaltgetriebes, welcher eine Endanschlagdämpfungseinrichtung zur Dämpfung eines Endanschlags einer Kolbeneinheit (2) des Aktuators (1) nach einem der vorhergehenden Ansprüche aufweist, **dadurch gekennzeichnet, dass** zum Antreiben einer Bewegung der Kolbeneinheit (2) koaxial zu seiner Längsachse (4) einer von zwei Druckräumen (8, 9), welche durch die Kolbeneinheit (2) in einem Zylindergehäuse (3) voneinander getrennt sind, mit einem Überdruck (p(t)_1) beaufschlagt und der andere der beiden Druckräume (9, 8) gleichzeitig entlüftet wird, dass eine zweistufige Dämpfung zum Dämpfen eines Endanschlags der Kolbeneinheit (2) an einer Endanschlagfläche (5, 6) im Aktuator (1) erfolgt, indem zunächst unter Nutzung einer pneumatischen Dämpfungsstufe mittels eines pneumatischen Dämpfungselements (19, 20) bei der Annäherung der Kolbeneinheit (2) an die Endanschlagfläche (5, 6) ein der Kolbenbewegung entgegenwirkender, selbstregulierender Gegendruck (p(t)_2) in dem zu entlüftenden der beiden Druckräume (8, 9) erzeugt wird, wobei eine mit dem Druckraum (8, 9) pneumatisch verbundene wirksame Querschnittsfläche (28, 29) eines Luftaustritts (34, 35) des pneumatischen Dämpfungselements (19, 20) druckabhängig selbständig unterschiedlich groß eingestellt wird, und dass anschließend durch Nutzung einer mechanischen Dämpfungsstufe bei Erreichen der Endanschlagfläche (5, 6) die noch verbliebene kinetische Energie der Kolbeneinheit (2) durch elastisches Deformieren eines mechanischen Dämpfungselements (40, 41) abgebaut wird.

9. Verfahren nach Anspruch 8, **dadurch gekennzeichnet, dass** ein zeitlicher Verlauf eines Luftmassenstroms (dm/dt_1, dm/dt_2, dm/dt_3) einer jeweiligen Entlüftung des jeweiligen Druckraums (8, 9) sowie eines davon abhängigen zeitlichen Verlaufs eines Stellwegs (x(t)) der Kolbeneinheit (2) über eine mit Hilfe eines Simulationsalgorithmus vorab rechnerisch bestimmte Dimensionierung des ersten Luftaustritts (34) beziehungsweise zweiten Luftaustritts (34, 35) zumindest annähernd festgelegt wird, wobei die wirksamen Querschnittsflächen (28, 29, 30, 31) der permanent offenen ersten beziehungsweise zweiten Durchgangsöffnung (26, 27) und der druckabhängig offenen ersten beziehungsweise zweiten Luftaustrittsöffnung (23, 24) sowie die in Schließrichtung wirksame Federvorspannung der ersten beziehungsweise zweiten Luftaustrittsklappe (21, 22) unter Berücksichtigung eines vorgegebenen Druckniveaus einer Druckluftversorgung (36) aufeinander abgestimmt werden.

10. Automatisiertes oder automatisches Schaltgetriebe in einem Antriebsstrang eines Kraftfahrzeugs, mit mindestens einem Aktuator (1), welcher gemäß wenigstens einem der vorhergehenden Vorrichtungsansprüche ausgebildet und gemäß wenigstens einem der vorhergehenden Verfahrensansprüche steuerbar ist.

## Claims

1. An actuator (1) for an automated or an automatic transmission, which has a cylinder housing (3), a piston unit (2) and a piston rod (13), in which the piston unit (2) is coupled to the piston rod (13) and is arranged in the cylinder housing (3) in a movable manner along an axial longitudinal axis (4), in which the piston unit (2) separates two pressure chambers (8, 9) which have a variable volume, in the cylinder housing (3), said pressure chambers being used to supply the piston unit (2) with compressed air on both sides, in which the two pressure chambers (8, 9) are connected to a valve unit (14), by means of which the application of pressure or the ventilation of each of the two pressure chambers (8, 9) can be switched, and in which an end stop damping device for damping at least one end stop of the piston unit (2) is arranged in the actuator (1),
wherein the end stop damping device is configured to be two-stage, namely, with a first, pneumatically operating damping stage and with a second, mechanically operating damping stage,
wherein by means of the pneumatic damping stage the kinetic energy of the piston unit (2) in at least one direction of movement of the same is reducible coaxially to the longitudinal axis (4) in the event of an approach of the piston unit (2) to an end stop surface (5, 6) formed on the cylinder housing (3) by means of a pneumatic damping element (19, 20),
wherein the pneumatic damping element (19, 20) has an air outlet (34, 35) that can be changed with respect to its capacity for compressed air, which is pneumatically connectible to one of the two pressure chambers (8, 9) by switching the valve unit (14) to a ventilating position, wherein the operating cross-sectional surface (28, 29) of the air outlet (34, 35) is variably adjustable depending on the pressure in the pressure chamber (8, 9) connected to it, and in which, by means of the mechanical damping stage, a remaining kinetic energy of the piston unit (2) after braking by the pneumatic damping element (19, 20) can be reduced upon its reaching the end stop surface (5, 6) by means of a mechanical damping element (40, 41).

2. The actuator according to claim 1, **characterized in that** the end stop damping device is configured or operative coaxial to the longitudinal axis (4) for both movement directions of the piston unit (2), wherein the pneumatic damping stage has a first pneumatic damping element (19) for a first movement direction coaxial to the longitudinal axis (4) as well as a second pneumatic damping element (20) for a second movement direction coaxial to the longitudinal axis (4), which are assigned to the valve unit (14), and that the mechanical damping stage has a first mechanical damping element (40) for axially stopping the piston unit (2) on a first end stop surface (5) of the cylinder housing (3) and a second mechanical damping element (41) for stopping the piston unit (2) on an opposing end stop surface (6) of the cylinder housing (3), said mechanical damping elements which are arranged on the piston unit (2).

3. The actuator according to claim 2, **characterized in that** the first pneumatic damping element (19) is switchable by a first 3/2 way solenoid valve (15, 17) of the valve unit (14), that the second pneumatic damping element (20) is switchable by a second 3/2 way solenoid valve (15, 17) of the valve unit (14), that the two pneumatic damping elements (19, 20) each have an air outlet flap (21, 22) designed as a spring lip, which are arranged on a first or second air outlet opening (23, 24) of a first or second air outlet (34, 35) connectable to the first pressure chamber (8) or to the second pressure chamber (9), wherein the respective air outlet flap (21) is fastened on one side on the first or second air outlet opening (23, 24) such that the respective air outlet flap (21, 22) normally fits tightly with spring preload on the assigned air outlet opening (23, 24) and in the event of an application of pressure to the respective air outlet flap (21, 22), lifts from the first or second pressure chamber (8, 9) in the event of exceeding a pressure threshold value by overcoming the spring preload from the respective air outlet opening (23, 24) and that the two air outlet flaps (21, 22) each have in addition a permanently open through opening (26, 27), wherein an operative third cross-sectional surface (30) or a fourth operative cross-sectional surface (31) of the first through opening (26) or of the second through opening (27) is substantially smaller than a first cross-sectional surface (28) or a second operative cross-sectional surface (28, 29) of the air outlet opening (23, 24) that is pressure-dependently releasable by the respective air outlet flap (21, 22), wherein these pressure-dependent releasable air outlet openings (23, 24) are substantially smaller than a fifth operative cross-sectional surface (32) or a sixth operative cross-sectional surface (33) of the piston unit (2).

4. The actuator according to any of claims 1 to 3, **characterized in that** the piston unit (2) has a radially inner main piston (10) firmly connected to the piston rod (13), **in that** the main piston (10) bears a first auxiliary piston (11) assigned to the first pressure chamber (8) and a second auxiliary piston (12) assigned to the second pressure chamber (9), **in that** the auxiliary pistons (11, 12) are arranged radially above the main piston (10) and displaceable to a limited extent relative to said main piston as well as coaxially to the longitudinal axis (4), **in that** for the purpose of stopping the piston unit (2) on the first end stop surface (5) of the cylinder housing (3) a first mechanical damping element (40) designed as a rubber buffer is arranged on the front side of the first end stop surface (5) of the cylinder housing (3) opposite on the first auxiliary piston (11), and **in that** for the purpose of stopping the piston unit (2) on the second end stop surface (6) of the cylinder housing (3) a second mechanical damping element (41) designed as a rubber buffer is arranged on the front side of the second end stop surface (6) of the cylinder housing (3) opposite on the second auxiliary piston (12).

5. The actuator according to any of claims 2 to 4 when claim 4 is dependent on claims 2 or 3, **characterized in that** the two pneumatic damping elements (19, 20) are integrated in a valve block of the valve unit (14).

6. The actuator according to any of claims 2, 3, 5 or 4 when claim 4 is dependent on claims 2 or 3, **characterized in that** the two pneumatic damping elements (19, 20) are directly integrated in a respective assigned 3/2 way solenoid valve (15, 17) of the valve unit (14).

7. The actuator according to any of claims 2, 3, 5, 6 or 4 when 4 is dependent on claim 2 or 3, **characterized in that** an effective dead volume (39) remaining in an end position of the piston unit (2), which includes a volume subject to change in the respective pressure chamber (8, 9) in the region between the piston unit (2) and the first or second end stop surface (5, 6) as well as a volume of a pneumatic connection between the respective pressure chamber (8, 9) and the assigned air outlet opening (23, 24) of the respective damping element (19, 20), is configured constructively minimized.

8. A method for controlling an actuator (1) of an automated or an automatic transmission, which has an end stop damping device for damping an end stop of a piston unit (2) of the actuator (1) according to any of the preceding claims, **characterized in that** for driving a movement of the piston unit (2) coaxially to its longitudinal axis (4) of one of two pressure chambers (8, 9), which are separated from each other by the piston unit (2) in a cylinder housing (3), are supplied with an excess pressure (p(t)_1) and the other of the two pressure chambers (9, 8) is simultaneously ventilated, that a two-stage damping for the damping of an end stop of the piston unit (2) occurs on an end stop surface (5, 6) in the actuator (1), by first, using a pneumatic damping stage by means of a pneumatic damping element (19, 20) in the approach of the piston unit (2) to the end stop surface (5, 6), generating a self-regulating counter pressure (p(t)_2) counteracting the piston movement in the pressure chamber of the two pressure chambers (8, 9) to be ventilated, wherein an operative cross-sectional surface (28, 29) of an air outlet (34, 35) of the pneumatic damping element (19, 20) pneumatically connected to the pressure chamber (8, 9) is pressure-dependently, independently set to different sizes, and that subsequently by using a mechanical damping stage upon reaching the end stop surface (5, 6), the remaining kinetic energy of the piston unit (2) is reduced by means of elastic deformation of a mechanical damping element (40, 41).

9. The method according to claim 8, **characterized in that** a chronological sequence of an air mass flow (dm/dt_1, dm/dt_2, dm/dt_3) of a respective ventilation of the respective pressure chamber (8, 9) as well as a chronological sequence dependent thereupon of a travel distance (x(t)) of the piston unit (2) via a dimensioning of the first air outlet (34) calculated previously with the aid of a simulation algorithm or of the second air outlet (34, 35) is at least approximately determined, wherein the operative cross-sectional surfaces (28, 29, 30, 31) of the permanently open first or second through opening (26, 27) and the pressure-dependently open first or second air outlet opening (23, 24) as well as the spring preload of the first or second air outlet flap (21, 22) operative in the closing direction are synchronized with one another in consideration of a predefined pressure level of a compressed air supply (36).

10. An automated or automatic transmission in a drive train of a motor vehicle with at least one actuator (1), which is configured according to at least one of the preceding device claims and is controllable according to at least one of the preceding method claims.

## Revendications

1. Actionneur (1) pour une boîte de vitesses automatisée ou automatique, lequel présente un corps de cylindre (3), une unité piston (2) et une tige de piston (13), pour lequel l'unité piston (2) est accouplée à la tige de piston (13) et est disposée dans le corps de cylindre (3) de manière mobile le long d'un axe longitudinal (4) axial, pour lequel l'unité piston (2) sépare l'une de l'autre dans le corps de cylindre (3) deux chambres de pression (8, 9) variables en ce qui concerne leur volume, au moyen desquelles l'unité piston (2) peut être soumise des deux côtés à l'action d'air comprimé, pour lequel les deux chambres de pression (8, 9) sont reliées à une unité soupape (14), au moyen de laquelle l'une des application de pression ou ventilation de chacune des deux chambres de pression (8, 9) peut être commutée, et pour lequel un dispositif d'amortissement de butée de fin de course destiné à amortir au moins une butée de fin de course de l'unité piston (2) est disposé dans l'actionneur (1),
dans lequel le dispositif d'amortissement de butée de fin de course est réalisé à deux étages, à savoir avec un premier étage d'amortissement à action pneumatique et avec un deuxième étage d'amortissement à action mécanique,
dans lequel, au moyen de l'étage d'amortissement pneumatique, l'énergie cinétique de l'unité piston (2) dans au moins une direction de mouvement de celle-ci de manière coaxiale par rapport à l'axe longitudinal (4) lors d'un rapprochement de l'unité piston (2) d'une surface de butée de fin de course (5, 6) réalisée sur le corps de cylindre (3) peut être diminuée au moyen d'un élément d'amortissement pneumatique (19, 20),
dans lequel l'élément d'amortissement pneumatique (19, 20) présente une sortie d'air (34, 35) pouvant être modifiée en ce qui concerne sa capacité d'écoulement pour de l'air comprimé, laquelle peut être reliée pneumatiquement à une des deux chambres de pression (8, 9) par commutation de l'unité soupape (14) dans une position de ventilation, dans lequel la surface de section transversale active (28, 29) de la sortie d'air (34, 35) peut être réglée de manière variable en fonction de la pression dans la chambre de pression (8, 9) reliée à celle-ci, et pour lequel, au moyen de l'étage d'amortissement mécanique, une énergie cinétique de l'unité piston (2) restante après le freinage par l'élément d'amortissement pneumatique (19, 20), lorsque celle-ci a atteint la surface de butée de fin de course (5, 6), peut être diminuée au moyen d'un élément d'amortissement mécanique (40, 41) .

2. Actionneur selon la revendication 1, **caractérisé en ce que** le dispositif d'amortissement de butée de fin de course est réalisé ou actif pour les deux directions de mouvement de l'unité piston (2) coaxiales par rapport à l'axe longitudinal (4), dans lequel l'étage d'amortissement pneumatique présente un premier élément d'amortissement pneumatique (19) pour une première direction de mouvement coaxiale par rapport à l'axe longitudinal (4) ainsi qu'un deuxième élément d'amortissement pneumatique (20) pour une deuxième direction de mouvement coaxiale par rapport à l'axe longitudinal (4), lesquels sont associés à l'unité soupape (14), et que l'étage d'amortissement mécanique présente un premier élément d'amortissement mécanique (40) pour la venue en butée axiale de l'unité piston (2) contre une première surface de butée de fin de course (5) du corps de cylindre (3) ainsi qu'un deuxième élément d'amortissement mécanique (41) pour la venue en butée de l'unité piston (2) contre une deuxième surface de butée de fin de course (6) opposée du corps de cylindre (3), lesquelles sont disposées sur l'unité piston (2).

3. Actionneur selon la revendication 2, **caractérisé en ce que** le premier élément d'amortissement pneumatique (19) peut être commuté par une première électrovanne à 3/2 voies (15, 17) de l'unité soupape (14), que le deuxième élément d'amortissement pneumatique (20) peut être commuté par une deuxième électrovanne à 3/2 voies (15, 17) de l'unité soupape (14), que les deux éléments d'amortissement pneumatiques (19, 20) présentent respectivement un clapet de sortie d'air (21, 22) réalisé sous la forme d'une lèvre élastique, lesquels sont disposés sur une première ou deuxième ouverture de sortie d'air (23, 24), pouvant être reliée à la première chambre de pression (8) ou à la deuxième chambre de pression (9), d'une première ou deuxième sortie d'air (34, 35), dans lequel le clapet de sortie d'air (21) respectif est fixé d'un côté sur la première ou deuxième ouverture de sortie d'air (23, 24), de telle sorte que le clapet de sortie d'air (21, 22) respectif s'applique normalement de manière étanche avec une précontrainte de ressort contre l'ouverture de sortie d'air (23, 24) associée et, lorsque le clapet de sortie d'air (21, 22) respectif est soumis à l'action d'une pression provenant de la première ou deuxième chambre de pression (8, 9), lorsqu'une valeur seuil de pression est dépassée, se soulève de l'ouverture de sortie d'air (23, 24) respective en surmontant la précontrainte de ressort, et que les deux clapets de sortie d'air (21, 22) présentent respectivement en plus une ouverture de passage (26, 27) ouverte en permanence, dans lequel une troisième surface de section transversale active (30) ou une quatrième surface de section transversale active (31) de la première ouverture de passage (26) ou de la deuxième ouverture de passage (27) est sensiblement plus petite qu'une première surface de section transversale (28) ou une deuxième surface de section transversale active (28, 29) de l'ouverture de sortie d'air (23, 24) pouvant être libérée en fonction de la pression par le clapet de sortie d'air (21, 22) respectif, dans lequel ces ouvertures de sortie d'air (23, 24) pouvant être libérées en fonction de la pression sont sensiblement plus petites qu'une cinquième surface de section transversale active (32) ou une sixième surface de section transversale active (33) de l'unité piston (2).

4. Actionneur selon l'une quelconque des revendications 1 à 3, **caractérisé en ce que** l'unité piston (2) présente un piston principal (10) radialement intérieur relié fixement à la tige de piston (13), que le piston principal (10) présente un premier piston auxiliaire (11) associé à la première chambre de pression (8) et un deuxième piston auxiliaire (12) associé à la deuxième chambre de pression (9), que les pistons auxiliaires (11, 12) sont disposés de manière à pouvoir se déplacer de manière limitée radialement au-dessus du piston principal (10) et par rapport à celui-ci ainsi que coaxialement par rapport à l'axe longitudinal (4), que pour la venue en butée de l'unité piston (2) contre la première surface de butée de fin de course (5) du corps de cylindre (3), un premier élément d'amortissement mécanique (40) réalisé sous la forme d'un tampon en caoutchouc est disposé frontalement à l'opposé de la première surface de butée de fin de course (5) du corps de cylindre (3) sur le premier piston auxiliaire (11), et que pour la venue en butée de l'unité piston (2) contre la deuxième surface de butée de fin de course (6) du corps de cylindre (3), un deuxième élément d'amortissement mécanique (41) réalisé sous la forme d'un tampon en caoutchouc est disposé frontalement à l'opposé de la deuxième surface de butée de fin de course (6) du corps de cylindre (3) sur le deuxième piston auxiliaire (12).

5. Actionneur selon l'une quelconque des revendications 2 à 4 lorsque la revendication 4 dépend des revendications 2 ou 3,
**caractérisé en ce que** les deux éléments d'amortissement pneumatiques (19, 20) sont intégrés dans un bloc de soupapes de l'unité soupape (14).

6. Actionneur selon l'une quelconque des revendications 2, 3, 5 ou 4 lorsque la revendication 4 dépend des revendications 2 ou 3, **caractérisé en ce que** les deux éléments d'amortissement pneumatiques (19, 20) sont intégrés directement dans respectivement une électrovanne à 3/2 voies (15, 17) associée de l'unité soupape (14).

7. Actionneur selon l'une quelconque des revendications 2, 3, 5, 6 ou 4 lorsque la revendication 4 dépend des revendications 2 ou 3, **caractérisé en ce qu'**un volume mort effectif (39) résiduel dans une position finale de l'unité piston (2), lequel renferme un volume restant libre dans la zone entre l'unité piston (2) et la première ou deuxième surface de butée de fin de course (5, 6) dans la chambre de pression (8, 9) respective ainsi qu'un volume d'une liaison pneumatique entre la chambre de pression (8, 9) respective ainsi que l'ouverture de sortie d'air (23, 24) associée de l'élément d'amortissement pneumatique (19, 20) respectif, est réalisé avec une structure réduite au minimum.

8. Procédé pour commander un actionneur (1) d'une boîte de vitesses automatisée ou automatique, lequel présente un dispositif d'amortissement de butée de fin de course destiné à amortir une butée de fin de course d'une unité piston (2) de l'actionneur (1) selon l'une quelconque des revendications précédentes, **caractérisé en ce que**, pour l'entraînement d'un mouvement de l'unité piston (2) coaxial par rapport à son axe longitudinal (4), une de deux chambres de pression (8, 9), lesquelles sont séparées l'une de l'autre par l'unité piston (2) dans un corps de cylindre (3), est soumise à l'action d'une surpression (p(t)_1) et l'autre des deux chambres de pression (9, 8) est ventilée simultanément, qu'un amortissement à deux étages destiné à amortir une butée de fin de course de l'unité piston (2) sur une surface de butée de fin de course (5, 6) dans l'actionneur (1) s'effectue du fait que tout d'abord, à l'aide d'un étage d'amortissement pneumatique, au moyen d'un élément d'amortissement pneumatique (19, 20), lorsque l'unité piston (2) se rapproche de la surface de butée de fin de course (5, 6), une contre-pression (p(t)_2) autorégulatrice, agissant à l'encontre du mouvement du piston, est produite dans la chambre de pression à ventiler des deux chambres de pression (8, 9), dans lequel une surface de section transversale active (28, 29), reliée pneumatiquement à la chambre de pression (8, 9), d'une sortie d'air (34, 35) de l'élément d'amortissement pneumatique (19, 20) est réglée de façon plus ou moins grande et de façon autonome en fonction de la pression, et qu'ensuite, à l'aide d'un étage d'amortissement mécanique, lorsque la surface de butée de fin de course (5, 6) est atteinte, l'énergie cinétique encore résiduelle de l'unité piston (2) est diminuée par la déformation élastique d'un élément d'amortissement mécanique (40, 41).

9. Procédé selon la revendication 8, **caractérisé en ce qu'**une variation dans le temps d'un débit massique d'air (dm/dt_1, dm/dt_2, dm/dt_3) d'une ventilation respective de la chambre de pression (8, 9) respective ainsi qu'une variation dans le temps, dépendant de celle-ci, d'une course de réglage (x(t)) de l'unité piston (2) est déterminée au moins approximativement par l'intermédiaire d'un dimensionnement, défini préalablement par calcul à l'aide d'un algorithme de simulation, de la première sortie d'air (34) ou deuxième sortie d'air (34, 35), dans lequel les surfaces de section transversale actives (28, 29, 30, 31) de la première ou deuxième ouverture de passage (26, 27) ouverte en permanence et de la première ou deuxième ouverture de sortie d'air (23, 24) ouverte en fonction de la pression ainsi que la précontrainte de ressort, active dans la direction de fermeture, du premier ou deuxième clapet de sortie d'air (21, 22), sont adaptées les unes aux autres avec prise en compte d'un niveau de pression prédéfini d'une alimentation en air comprimé (36).

10. Boîte de vitesses automatisée ou automatique dans une chaîne cinématique d'un véhicule à moteur, avec au moins un actionneur (1), lequel est réalisé selon au moins une des revendications de dispositif précédentes et peut être commandé selon au moins une des revendications de procédé précédentes.
